# EUROPEAN PATENT APPLICATION

(11) **EP 4 693 644 A1**
(43) Date of publication of application: **11.02.2026**
(21) Application number: 24850557.0
(22) Date of filing: 07.04.2024
(51) Int. Cl.: H01M 50/202

(54) **BATTERY CELL, BATTERY AND ELECTRIC DEVICE**

(30) Priority: 07.08.2023 CN 202310983654
(71) Applicant: Contemporary Amperex Technology Co., Limited, Ningde, Fujian 352100 (CN)
(72) Inventor: CHEN, Hongwei, Ningde, Fujian 352100 (CN); BAI, Hualei, Ningde, Fujian 352100 (CN); YANG, Jianxiong, Ningde, Fujian 352100 (CN); GUO, Zhijun, Ningde, Fujian 352100 (CN)
(74) Representative: Kraus & Lederer PartGmbB
(86) International application number: PCT/CN2024/086385
(87) International publication number: WO 2025/030900

(57) **Abstract**

A battery cell, a battery, and an electric apparatus capable of enhancing the pressure relief capability of the battery cell are provided. The battery cell includes an electrode assembly; an end cap assembly, including an end cap and an insulating member positioned between the end cap and the electrode assembly, where the end cap is provided with a pressure relief mechanism, and a position on the insulating member corresponding to the pressure relief mechanism is provided with a second discharge hole, the second discharge hole penetrating the insulating member along a thickness direction of the end cap assembly; and a support member, positioned between the insulating member and the electrode assembly, where a position on the support member corresponding to the pressure relief mechanism is provided with a first discharge hole, the first discharge hole penetrating the support member along the thickness direction.

## Description

### CROSS-REFERENCE TO RELATED APPLICATIONS

The present application claims priority to Chinese Patent Application No. 202310983654.X, filed on August 7, 2023, and entitled "BATTERY CELL, BATTERY, AND ELECTRIC APPARATUS", which is incorporated herein by reference in its entirety.

### TECHNICAL FIELD

The present application relates to the field of batteries, and in particular, to a battery cell of a battery, a battery, and an electric apparatus.

### BACKGROUND

Energy conservation and emission reduction are crucial to the sustainable development of the automobile industry. Electric vehicles, with their advantages in energy conservation and emission reduction, have become an important part of the sustainable development of the automobile industry. For electric vehicles, battery technologies are an important factor in connection with their development. A battery consists of battery cells, and each battery cell is provided with a pressure relief mechanism for releasing internal pressure. How to enhance the pressure relief capability of a battery cell is an urgent issue to be addressed.

### SUMMARY

An embodiment of the present application provides a battery cell, a battery, and an electric apparatus capable of enhancing the pressure relief capability of the battery cell.

According to a first aspect, a battery cell is provided, including: an electrode assembly; an end cap assembly, including an end cap and an insulating member positioned between the end cap and the electrode assembly, where the end cap is provided with a pressure relief mechanism, and a position on the insulating member corresponding to the pressure relief mechanism is provided with a second discharge hole, the second discharge hole penetrating the insulating member along a thickness direction of the end cap assembly; and a support member, positioned between the insulating member and the electrode assembly, where a position on the support member corresponding to the pressure relief mechanism is provided with a first discharge hole, the first discharge hole penetrating the support member along the thickness direction.

In an embodiment of the present application, the battery cell releases the internal pressure thereof through the pressure relief mechanism on the end cap assembly. A support member is provided between the end cap assembly and the electrode assembly, capable of providing support between the electrode assembly and the end cap assembly, particularly for an inverted battery cell, the electrode assembly can be supported, preventing the weight of the electrode assembly from being easily transmitted to tabs and causing risks. The support member is positioned between the insulating member of the end cap assembly and the electrode assembly. A position on the insulating member corresponding to the pressure relief mechanism is provided with a second discharge hole penetrating the insulating member, and a position on the support member corresponding to the pressure relief mechanism is provided with a first discharge hole penetrating the support member, allowing gases and other emissions inside the battery cell to pass through the first discharge hole on the support member and the second discharge hole on the insulating member and be discharged to the exterior of the battery cell through the pressure relief mechanism, thereby achieving pressure relief and enhancing the pressure relief capability of the battery cell. Additionally, the first discharge hole can also serve to reduce the weight of the support member.

In some possible implementations, a projection of the first discharge hole on a plane perpendicular to the thickness direction does not overlap with a projection of the second discharge hole on the plane. This configuration can increase a total discharge area, improving discharge efficiency. For example, the projection of the second discharge hole on the plane may surround the projection of the first discharge hole on the plane.

The projection of the second discharge hole on the plane perpendicular to the thickness direction may, for example, be annular, such as a circular or elliptical annular shape. Configuring the second discharge hole as annular allows gases and other emissions inside the battery cell to be discharged uniformly in various directions within a limited area, providing superior discharge performance.

In some possible implementations, a projection of the first discharge hole on a plane perpendicular to the thickness direction at least partially overlaps with a projection of the second discharge hole on the plane. This configuration can shorten the discharge path between the first discharge hole and the second discharge hole, allowing gases and other emissions inside the battery cell to quickly pass through the second discharge hole on the insulating member after passing through the first discharge hole on the support member and reach the pressure relief mechanism, and being discharged from the pressure relief mechanism, thereby achieving effective pressure relief and improving discharge efficiency.

For example, the first discharge hole includes a first sub-discharge hole and a second sub-discharge hole, where the projection of the second discharge hole on the plane surrounds a projection of the first sub-discharge hole on the plane, and a projection of the second sub-discharge hole on the plane overlaps with the projection of the second discharge hole on the plane. By providing the first sub-discharge hole and the second sub-discharge hole, both a discharge area is increased and a discharge path is shortened, improving discharge efficiency.

In some possible implementations, the projection of the second discharge hole on the plane perpendicular to the thickness direction is annular, and a dimension of the annular shape along the radial direction thereof is less than or equal to a dimension of the second sub-discharge hole along the radial direction, thereby reducing obstruction of the second discharge hole by the first discharge hole, which facilitates discharge performance.

In some possible implementations, an area of the first sub-discharge hole is greater than or equal to an area of the second sub-discharge hole. Setting the area of the first sub-discharge hole to be greater than that of the second sub-discharge hole enables full utilization of the area on the support member corresponding to the internal region surrounded by the second discharge hole, thereby improving discharge efficiency and facilitating reducing the weight of the support member.

In some possible implementations, the insulating member is provided with a first protruding portion that protrudes toward the support member, and the second discharge hole is at least partially located in the first protruding portion.

Providing the first protruding portion on the insulating member can increase a contact area between the insulating member and a film material on a surface of the electrode assembly, facilitating the connection between the insulating member and the film material and improving connection reliability. Additionally, the protruding portion on the insulating member can cooperate with a recessed portion provided at a corresponding position on the support member, improving the connection reliability between the insulating member and the support member.

In some possible implementations, an end portion of the first protruding portion along a width direction of the end cap assembly is provided with a step, and a side edge of the support member along a length direction of the end cap assembly is formed inward to provide a notch for avoiding the step.

In this implementation, the first protruding portion of the support member is provided with a step along the width direction of the end cap assembly, and the side edge of the support member along the length direction of the end cap assembly is formed inward to provide a notch for avoiding the step, allowing a portion of the support member corresponding to the first protruding portion to be accommodated within the step, such that the assembled support member is flush with a surface of the insulating member.

In some possible implementations, a gap is provided between an edge of the step and an edge of the notch along the width direction, where the gap is configured to avoid a portion of the second discharge hole provided along the edge of the step.

Providing a certain gap between the edge of the step on the insulating member and the notch on the support member for avoiding the step can allow for the avoidance of the portion of the second discharge hole provided along the edge of the step on the insulating member, reducing obstruction of the second discharge hole by the support member, which facilitates improving discharge performance.

In some possible implementations, a dimension of the notch in the length direction is greater than or equal to a dimension, in the length direction, of the portion of the second discharge hole provided along the edge of the step. The notch can fully avoid the portion of the second discharge hole located at the edge of the step in the length direction of the end cap assembly, minimizing or even eliminating obstruction of the second discharge hole by the support member in the length direction, further improving discharge performance.

In some possible implementations, the support member includes a main body portion and a second protruding portion that protrudes from the main body portion toward the electrode assembly, where the main body portion is configured to support tabs of the electrode assembly, the second protruding portion is configured to support a non-tab region on an end face of the electrode assembly, and the first discharge hole is located in the second protruding portion.

Since the tabs of the electrode assembly protrude from the end face of the electrode assembly facing the support member, the main body portion of the support member can be attached to the tabs to support the tabs, and the second protruding portion of the support member protruding from the main body portion toward the electrode assembly can be attached to the end face of the electrode assembly to support the end face. By supporting the tabs and the end face respectively with the main body portion and the second protruding portion, support reliability is improved. Additionally, the first discharge hole on the support member can be provided on the second protruding portion of the support member and aligned with the pressure relief mechanism of the battery cell, facilitating the discharge of internal pressure of the battery cell.

In some possible implementations, the support member is further provided with an opening penetrating the support member, where the opening is located at a position where the main body portion intersects with the second protruding portion. The opening can be configured to avoid the first protruding portion provided at a position on the insulating member corresponding to the second protruding portion and can also reduce the weight of the support member.

In some possible implementations, in a plane perpendicular to the thickness direction of the end cap assembly, a projection of the opening covers a portion of a projection of the second discharge hole that is not covered by a projection of the second protruding portion. The opening can effectively avoid at least a portion of the position of the second discharge hole, reducing obstruction of the second discharge hole by the support member, which facilitates improving discharge performance.

In some possible implementations, an end portion of the support member in the length direction of the end cap assembly is provided with a hooking portion, where the hooking portion is configured to hook and engage with the insulating member to connect the support member to the end cap assembly. By providing the hooking portion at the end portion of the support member, a simple and reliable connection between the support member and the insulating member can be achieved.

According to a second aspect, a battery is provided, including the battery cell according to the first aspect or any one of the possible implementations of the first aspect.

According to a third aspect, an electric apparatus is provided, including the battery according to the second aspect or any one of the possible implementations of the second aspect, where the battery is configured to supply power to the electric apparatus.

### BRIEF DESCRIPTION OF DRAWINGS

To describe the technical solutions in the embodiments of the present application more clearly, the following briefly describes the accompanying drawings required for describing the embodiments of the present application. Apparently, the accompanying drawings in the following descriptions show merely some embodiments of the present application, and persons of ordinary skill in the art may still derive other drawings from the accompanying drawings without creative efforts.
FIG. 1 is a schematic structural diagram of a vehicle according to an embodiment of the present application.
FIG. 2 is a schematic structural diagram of a battery according to an embodiment of the present application.
FIG. 3 is a schematic structural diagram of a battery cell according to an embodiment of the present application.
FIG. 4 is a schematic structural diagram of an end cap assembly according to an embodiment of the present application.
FIG. 5 is a schematic structural diagram of an insulating member and a support member before assembly according to an embodiment of the present application.
FIG. 6 is a schematic diagram of an insulating member and a support member after assembly according to an embodiment of the present application.
FIG. 7 is a partial cross-sectional view of a battery cell according to an embodiment of the present application.
FIG. 8 is a partial top view of an insulating member according to an embodiment of the present application.
FIG. 9 is a partial top view of an insulating member and a support member after assembly according to an embodiment of the present application.
FIG. 10 is a partial top view of an insulating member and a support member after assembly according to an embodiment of the present application.
FIG. 11 is a partial top view of an insulating member and a support member after assembly according to another embodiment of the present application.
FIG. 12 is a schematic structural diagram of an insulating member and a support member before assembly according to an embodiment of the present application.
FIG. 13 is a partial top view of an insulating member and a support member after assembly according to an embodiment of the present application.

In the accompanying drawings, the figures are not necessarily drawn to scale.

### DESCRIPTION OF EMBODIMENTS

To make the objectives, technical solutions, and advantages in embodiments of the present application clearer, the following clearly describes the technical solutions in some embodiments of the present application with reference to the accompanying drawings in some embodiments of the present application. Apparently, the described embodiments are some but not all of the embodiments of the present application. All other embodiments obtained by persons of ordinary skill in the art based on some embodiments of the present application without creative efforts shall fall within the protection scope of the present application.

Unless otherwise defined, all technical and scientific terms used in the present application shall have the same meanings as commonly understood by persons skilled in the art to which the present application relates. The terms used in the specification of the present application are intended to merely describe the specific embodiments rather than to limit the present application. The terms "include", "comprise", and "have" and any other variations thereof in the specification, claims and brief description of drawings of the present application are intended to cover non-exclusive inclusions. In the specification, claims, or accompanying drawings of the present application, the terms "first", "second", and the like are intended to distinguish between different objects rather than to indicate a particular sequence or relative importance.

The orientation terms appearing in the following description all refer to directions shown in the figures, and do not limit the specific structure of the present application. In the description of the present application, it should also be noted that unless otherwise specified and defined explicitly, the terms "mounting", "connection", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in the present application based on specific situations.

In the present application, reference to "embodiment" means that specific features, structures, or characteristics described with reference to the embodiment may be incorporated in at least one embodiment of the present application. The term "embodiment" appearing in various positions in the specification does not necessarily refer to the same embodiment or an independent or alternative embodiment that is exclusive of other embodiments. Persons skilled in the art explicitly and implicitly understand that the embodiments described in the present application can be combined with other embodiments.

The term "and/or" in the present application is only an associative relationship for describing associated objects, indicating that three relationships may be present. For example, A and/or B may indicate the following three cases: presence of only A; presence of both A and B; and presence of only B. In addition, the character "/" in the present application generally indicates an "or" relationship between the contextually associated objects.

In the present application, "multiple" means two or more. Similarly, "multiple groups" means two or more groups, and "multiple pieces" means two or more pieces.

In the embodiments of the present application, the battery cell may be a secondary battery, and the secondary battery is a battery cell that can be charged after being discharged, to activate active materials for continuous use. The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, and a lead storage battery. This is not limited in the embodiments of the present application.

A battery cell typically includes an electrode assembly. The electrode assembly includes a positive electrode, a negative electrode, and a separator. During charge and discharge process of the battery cell, active ions, for example, lithium ions, are intercalated and deintercalated between the positive electrode and the negative electrode. The separator is arranged between the positive electrode and the negative electrode to prevent short circuit of the positive electrode and negative electrode and to allow the active ions to pass through.

In some embodiments, the positive electrode may be a positive electrode plate, the positive electrode plate including a positive electrode current collector and a positive electrode active material provided on at least one surface of the positive electrode current collector.

The positive electrode current collector includes two back-to-back surfaces in a thickness direction of the positive electrode current collector, and the positive electrode active material is provided on either or both of the two back-to-back surfaces of the positive electrode current collector.

In an example, the positive electrode current collector may be a metal foil current collector or a composite current collector. For example, as the metal foil, the positive electrode current collector may use silver surface-treated aluminum or stainless steel, stainless steel, copper, aluminum, nickel, baked carbon, carbon, nickel, or titanium. The composite current collector may include a polymer material substrate and a metal layer. The composite current collector may be formed by forming a metal material, for example, aluminum, aluminum alloy, nickel, nickel alloy, titanium, titanium alloy, silver, or silver alloy, on the polymer material substrate, for example, substrates of polypropylene, polyethylene terephthalate, polybutylene terephthalate, polystyrene, or polyethylene.

The positive electrode active material may, for example, include at least one of the following materials: lithium-containing phosphate, lithium transition metal oxide, and respective modified compounds thereof. The present application is not limited to these materials, but may use other conventional materials that can be used as positive electrode active materials for batteries instead. One of these positive electrode active materials may be used alone, or two or more of them may be used in combination. An example of lithium-containing phosphates may include, but is not limited to, at least one of lithium iron phosphate, for example LiFePO4 (or LFP for short), a composite material of lithium iron phosphate and carbon, lithium manganese phosphate, for example, LiMnPO4, a composite material of lithium manganese phosphate and carbon, lithium manganese iron phosphate, or a composite material of lithium manganese iron phosphate and carbon.

In some embodiments, the negative electrode may be a negative electrode plate, the negative electrode plate including a negative electrode current collector and a negative electrode active material provided on at least one surface of the negative electrode current collector.

The negative electrode current collector includes two back-to-back surfaces in its thickness direction, and the negative electrode active material is disposed on either or both of the two back-to-back surfaces of the negative electrode current collector.

In an example, the negative electrode current collector may be a metal foil current collector or a composite current collector. For example, as the metal foil, the negative electrode current collector may use silver surface-treated aluminum or stainless steel, stainless steel, copper, aluminum, nickel, baked carbon, carbon, nickel, or titanium. The composite current collector may include a polymer material substrate and a metal layer. The composite current collector may be formed by forming a metal material, for example, copper, copper alloy, nickel, nickel alloy, titanium, titanium alloy, silver, or silver alloy, on a polymer material substrate, for example, substrates of polypropylene, polyethylene terephthalate, polybutylene terephthalate, polystyrene, or polyethylene.

The negative electrode active material may, for example, include at least one of the following materials: artificial graphite, natural graphite, soft carbon, hard carbon, a silicon-based material, a tin-based material, and lithium titanate.

In some embodiments, the negative electrode may also be a metal foam. The metal foam may be nickel foam, copper foam, aluminum foam, alloy foam, or carbon foam. It should be noted that when metal foam is used as the negative electrode plate, a surface of the metal foam may or may not be provided with a negative electrode active material.

In an example, the negative electrode current collector may also be filled with or/and deposited with a lithium source material, potassium metal, or sodium metal, where the lithium source material is lithium metal and/or a lithium-rich material.

The material of the positive electrode current collector may be, for example, aluminum. The material of the negative electrode current collector may be, for example, copper.

The separator in the electrode assembly is provided between the positive electrode and the negative electrode. In some embodiments, the separator is an isolating film. The isolating film is not limited to any type in the present application, and may be any porous isolating film with good chemical stability and mechanical stability. For example, major materials of the isolating film may be selected from at least one of glass fiber, non-woven fabric, polyethylene, polypropylene, polyvinylidene fluoride, or ceramics.

In some embodiments, the separator is a solid-state electrolyte. The solid-state electrolyte is provided between the positive electrode and the negative electrode, serving both to conduct ions and to isolate the positive electrode and the negative electrode.

In some embodiments, the battery cell further includes an electrolyte. The electrolyte conducts ions between the positive electrode and the negative electrode. The electrolyte is not limited to any type in the present application, and may be selected according to requirements. The electrolyte may be in a liquid state, a gel state, or a solid state.

In the embodiments of the present application, the electrode assembly may be of a winding structure, where a positive electrode plate and a negative electrode plate are wound to form the winding structure. The electrode assembly may also be of a laminated structure, for example, multiple positive electrode plates and multiple negative electrode plates may be provided, and multiple positive electrode plates and multiple negative electrode plates are alternately stacked. Alternatively, multiple positive electrode plates may be provided, and the negative electrode plate may be folded to form multiple stacked folded segments, with a positive electrode plate sandwiched between adjacent folded segments; or both the positive electrode plate and the negative electrode plate may be folded to form multiple stacked folded segments.

Multiple separators may be provided, and each separator is provided between any adjacent positive electrode plate and negative electrode plate.

In some embodiments, the separator may be provided continuously and arranged between any adjacent positive electrode plate and negative electrode plate by folding or winding.

The shape of the electrode assembly may be of, for example, a cylindrical shape, a flat shape, or a polygonal prism shape. The electrode assembly may be provided with tabs for conducting current from the electrode assembly. The tabs include a positive tab and a negative tab.

In some embodiments, the battery cell includes a shell. The shell is configured to encapsulate components such as the electrode assembly and the electrolyte. The shell may be a steel shell, an aluminum shell, a plastic shell, for example, polypropylene, a composite metal shell, for example a copper-aluminum composite shell, an aluminum-plastic film, or the like. The shell includes a box and a cover plate.

The battery cell may be a cylindrical battery cell, a prismatic battery cell, a pouch battery cell, or a battery cell of another shape. The prismatic battery cell includes a square shell battery cell, a blade battery cell, and a polygonal battery, where the prismatic battery may be a hexagonal battery. This is not limited in the embodiments of the present application.

The battery described in the embodiments of the present application may refer to a single physical module that includes one or more battery cells for providing a higher voltage and capacity. When multiple battery cells are provided, multiple battery cells are connected in series, parallel, or series-parallel via a busbar.

In some embodiments, the battery may be a battery module, and when multiple battery cells are provided, multiple battery cells are arranged and fastened to form a battery module.

In some embodiments, the battery may be a battery pack, the battery pack includes a box and battery cells, and the battery cells or battery modules are accommodated in the box.

In some embodiments, the box may be used as part of the chassis structure of a vehicle. For example, part of the box may become at least part of the chassis of a vehicle, or part of the box may become at least parts of a cross beam and longitudinal beam of a vehicle.

The battery cell in the battery typically releases the internal pressure thereof through a pressure relief mechanism on the end cap assembly thereof to reduce the risk of thermal runaway. A support member may be provided between the end cap assembly and the electrode assembly to provide support, but this support member may affect the release of internal pressure of the battery cell.

In view of this, the present application provides a battery cell, where a discharge hole is provided at a position on the support member corresponding to the pressure relief mechanism, allowing gases and other emissions inside the battery cell to pass through the discharge hole and be discharged from the pressure relief mechanism, thereby achieving effective pressure relief.

The technical solutions described in the embodiments of the present application are all applicable to various apparatuses that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships.

It should be understood that the technical solutions described in the embodiments of the present application are applicable to not only the apparatuses described above but also all apparatuses that use batteries. However, for brevity of description, in the following embodiments, an electric vehicle is used as an example for description.

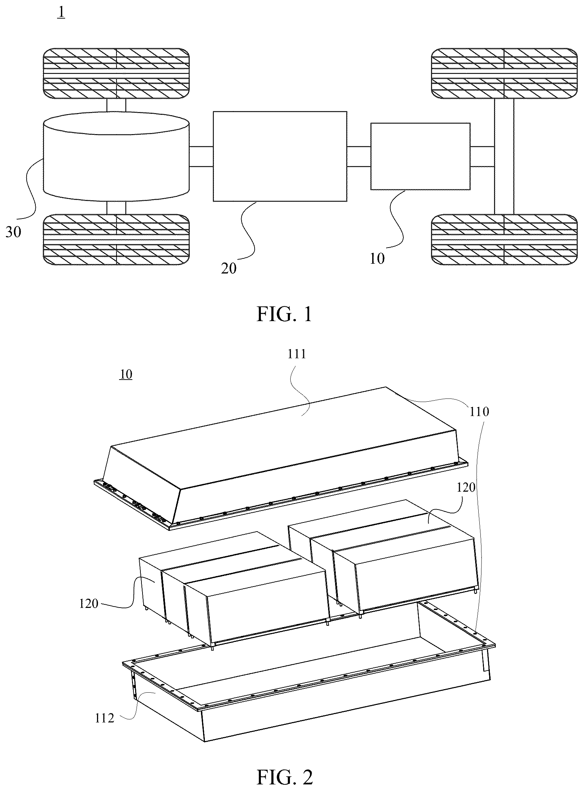

For example, as shown in FIG. 1, a schematic structural diagram of a vehicle 1 according to an embodiment of the present application is provided. The vehicle 1 may be a fossil fuel vehicle, a natural gas vehicle, or a new energy vehicle. The new energy vehicle may be a battery electric vehicle, a hybrid electric vehicle, a range-extended electric vehicle, or the like. A motor 30, a controller 20, and a battery 10 may be provided inside the vehicle 1, where the controller 20 is configured to control the battery 10 to supply power to the motor 30. For example, the battery 10 may be disposed at the bottom, front, or rear of the vehicle 1. The battery 10 may be configured to supply power to the vehicle 1. For example, the battery 10 may be used as an operational power source for the vehicle 1 which is configured for a circuit system of the vehicle 1, for example, to satisfy power needs of start, navigation, and running of the vehicle 1. In another embodiment of the present application, the battery 10 can be used as not only the operational power source for the vehicle 1, but also as a driving power source for the vehicle 1, replacing or partially replacing fossil fuel or natural gas to provide driving traction for the vehicle 1.

In order to meet different requirements for power use, the battery may include multiple battery cells of different types. Multiple battery cells may be formed into several battery cell groups by connecting the same in series, parallel, or series-parallel according to the types of the battery cells. The battery cell groups can then be connected in series to form a battery, where being connected in series-parallel means a combination of series and parallel connections. Multiple different battery cells may also be directly connected in series, parallel, or series-parallel to form a battery. In other words, multiple battery cells may directly form a battery, or they may first form battery cell groups according to the types of battery cells, and then the battery cell groups form a battery.

FIG. 2 shows a schematic structural diagram of a battery 10 according to an embodiment of the present application. The battery 10 may include multiple battery cells (not shown in the figure). The battery 10 may further include a box body (or cover) 110, where the box body 110 has a hollow structure inside, with multiple battery cells accommodated within the box body 110. The box body 110 may include two portions which are referred to herein as a first box portion 111 and a second box portion 112, respectively, and the first box portion 111 and the second box portion 112 are snap-fitted together. Shapes of the first box portion 111 and the second box portion 112 may be determined based on a shape of multiple battery cells that are combined. At least one of the first box portion 111 and the second box portion 112 is provided with an opening.

For example, as shown in FIG. 2, only one of the first box portion 111 and the second box portion 112 is a hollow cuboid with an opening, and the other is plate-shaped for covering the opening. Here, an example is used where the second box portion 112 is a hollow structure and has only one open surface with an opening and the first box portion 111 is a plate. Therefore, the first box portion 111 covers the opening of the second box portion 112 to form a box body 110 with a closed cavity. The cavity may be configured for accommodating multiple battery cells. Multiple battery cells are connected in parallel, series, or series-parallel, and then put into the box body 110 formed after the first box portion 111 and the second box portion 112 are snap-fitted.

For another example, unlike FIG. 2, the first box portion 111 and the second box portion 112 each may be a hollow structure and each have only one open surface. The opening of the first box portion 111 and the opening of the second box portion 112 are disposed opposite each other, and the first box portion 111 and the second box portion 112 are snap-fitted to form a box body 110 with a closed cavity. Multiple battery cells are connected in parallel, series, or series-parallel, and then put into the box body 110 formed after the first box portion 111 and the second box portion 112 are snap-fitted.

Additionally, the battery 10 may further include other structures. For example, the battery may further include a signal transmission assembly. The signal transmission assembly may be configured to transmit signals such as voltage and/or temperature of the battery cells. The signal transmission assembly may include a wiring harness board, and the wiring harness board may, for example, include a temperature sensor and a voltage sampling line to measure and transmit information such as voltage, current, and temperature of the battery, and communicate with a BMS to achieve safety management of the battery.

In some embodiments, the signal transmission assembly may further include a busbar, where the busbar is configured to achieve electrical connection between multiple battery cells, for example, parallel connection, series connection, or series-parallel connection. The busbar may achieve electrical connection between battery cells by connecting electrode terminals of the battery cells. In some embodiments, the busbar may be fixed to the electrode terminals of the battery cells through welding. The busbar transmits voltage of the battery cell. Multiple battery cells will get a relatively high voltage after being connected in series. Correspondingly, electrical connection formed by the busbar may also be referred to as "high-voltage connection".

In some embodiments, the busbar and the wiring harness board are encapsulated in an insulating layer to form a signal transmission assembly, also referred to as a CCS integrated component. The signal transmission assembly has no insulating layer at the connection points with the electrode terminals of the battery cells, that is, the insulating layer is provided with openings at these points to connect to the electrode terminals of the battery cells.

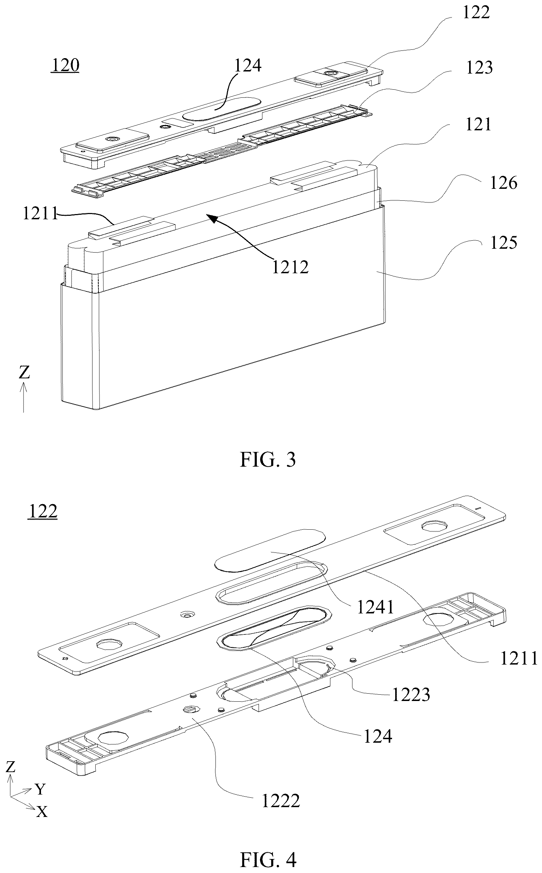

In an example, as shown in FIG. 3, a schematic structural diagram of a battery cell 120 according to an embodiment of the present application is provided. The battery cell 120 includes an electrode assembly 121, an end cap assembly 122, and a support member 123. The end cap assembly 122 is provided with a pressure relief mechanism 124. The support member 123 is positioned between the end cap assembly 122 and the electrode assembly 121, and a position on the support member 123 corresponding to the pressure relief mechanism 124 is provided with a first discharge hole 1231, penetrating the support member 123 along a thickness direction Z of the end cap assembly 122.

As shown in FIG. 3, a surface of the electrode assembly 121 may be, for example, covered with a film material 126, such as a polyester film (mylar). A housing 125 of the battery cell 120 is configured to accommodate the electrode assembly 121, and the end cap assembly 122 is configured to cover the electrode assembly 121 within the housing 125. The thickness direction Z of the end cap assembly 122 is perpendicular to an end face 1212 of the electrode assembly 121 where tabs 1211 are located.

The first discharge hole 1231 penetrates the support member 123 along the thickness direction Z, that is, the first discharge hole 1231 is a through-hole in the support member 123 along the thickness direction Z.

Optionally, the battery cell 120 may be an inverted battery cell, that is, when the battery 10 is provided in an electric apparatus, the electrode terminals of the battery cell 120 face away from the direction of passengers. At this time, the end cap assembly 122 is located below the electrode assembly 121, and by providing the support member 123 between the end cap assembly 122 and the electrode assembly 121, the electrode assembly 121 is supported, preventing the weight of the electrode assembly 121 from being easily transmitted to the tabs 1211 and causing risks.

The battery cell 120 releases the internal pressure thereof through the pressure relief mechanism 124 on the end cap assembly 122. A position on the support member 123 corresponding to the pressure relief mechanism 124 is provided with a first discharge hole 1231 penetrating the support member 123, allowing gases and other emissions inside the battery cell 120 to pass through the first discharge hole 1231 and be discharged from the pressure relief mechanism 124, achieving effective pressure relief and enhancing the pressure relief capability of the battery cell 120. Additionally, the first discharge hole 1231 can also serve to reduce weight.

The end cap assembly 122 includes an end cap 1221 and an insulating member 1222. The end cap 1221 and the housing 125 may be two separate components or may be integrally formed. The pressure relief mechanism 124 is provided on the end cap 1221. The pressure relief mechanism 124, also referred to as an explosion-proof valve, is configured to release high-temperature and high-pressure emissions inside the battery cell 120 during thermal runaway, such as electrolyte, fragments of positive and the negative electrode plates and separator caused by dissolution or breaking, high-temperature and high-speed gases and flames produced in reaction, and the like. These emissions cause at least a portion of the pressure relief mechanism 124 to crack, melt, or split, that is, to open, thereby being discharged to the exterior of the battery cell 120 through the pressure relief mechanism 124. The pressure relief mechanism 124 may be, for example, connected to the end cap 1221 through welding or other methods, and a surface of the pressure relief mechanism may be covered with a film layer 1241.

In some embodiments, as shown in FIG. 4, a position on the insulating member 1222 corresponding to the pressure relief mechanism 124 is provided with a second discharge hole 1223, the second discharge hole 1223 penetrating the insulating member 1222 along the thickness direction Z. A position on the insulating member 1222 corresponding to the pressure relief mechanism 124 is provided with the second discharge hole 1223, and a position on the support member 123 corresponding to the pressure relief mechanism 124 is provided with the first discharge hole 1231, allowing gases and other emissions inside the battery cell 120 to pass through the first discharge hole 1231 on the support member 123 and the second discharge hole 1223 on the insulating member 1222 and be discharged to the exterior of the battery cell 120 from the pressure relief mechanism 124, achieving pressure relief and enhancing the pressure relief capability of the battery cell 120. Typically, the insulating member 1222 may also be referred to as a lower plastic, configured to isolate electrical connection components inside the housing 125 from the end cap 1221 to reduce the risk of short circuits. The insulating member 1222 may be, for example, made of plastic, rubber, or other materials.

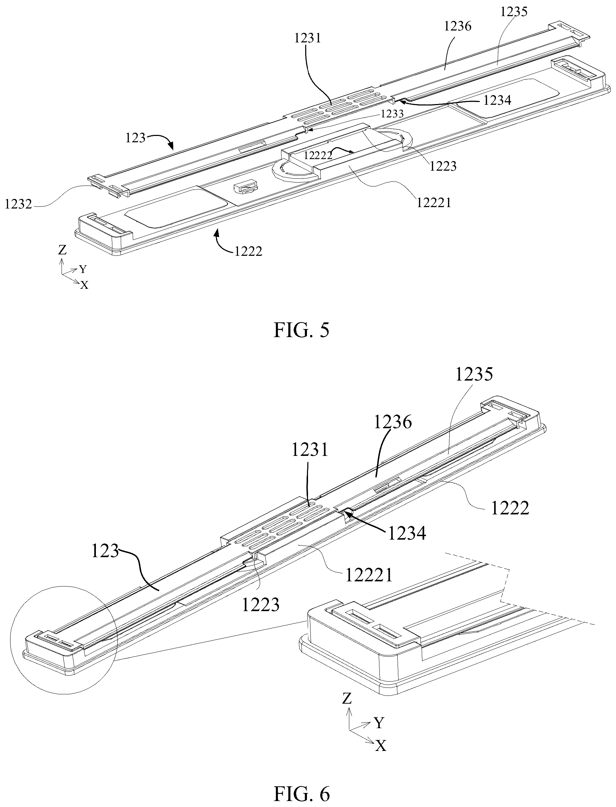

The insulating member 1222 is positioned between the end cap 1221 and the support member 123, and the insulating member 1222 is connected to the support member 123. For example, as shown in FIG. 5, an end portion of the support member 123 in a length direction Y of the end cap assembly 122 is provided with a hooking portion 1232, where the hooking portion 1232 is configured to hook and engage with the insulating member 1222 to connect the support member 123 to the end cap assembly 122. By providing the hooking portion 1232 at the end portion of the support member 123, connection between the support member 123 and the insulating member 1222 can be conveniently achieved.

In some embodiments, as shown in FIG. 5, the insulating member 1222 is provided with a first protruding portion 12221 that protrudes toward the support member 123, and the second discharge hole 1223 is at least partially located in the first protruding portion 12221. Providing the first protruding portion 12221 on the insulating member 1222 can increase a contact area between the insulating member 1222 and the film material 126 on the surface of the electrode assembly 121, facilitating connection between the insulating member 1222 and the film material 126 and improving connection reliability. Additionally, as shown in FIG. 5, the support member 123 may form a recessed portion 1233, and the first protruding portion 12221 on the insulating member 1222 can cooperate with the recessed portion 1233 on the support member 123, enhancing connection reliability between the insulating member 1222 and the support member 123.

In some embodiments, as shown in FIG. 5, an end portion of the first protruding portion 12221 along a width direction X of the end cap assembly 122 is provided with a step 12222, and a side edge of the support member 123 along the length direction Y of the end cap assembly 122 is formed inward to provide a notch 1234 for avoiding the step 12222.

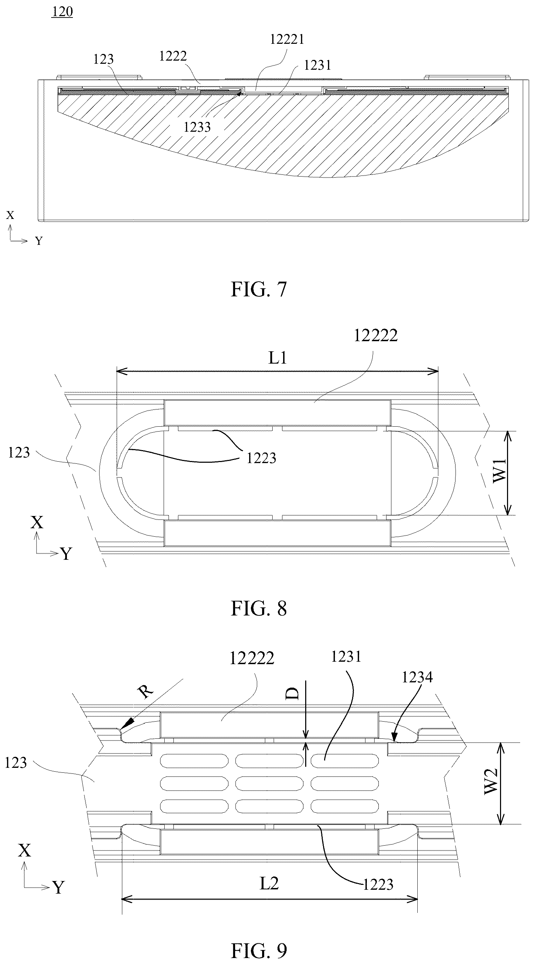

After the support member 123 and the insulating member 1222 are assembled, as shown in FIG. 6 and FIG. 7, FIG. 6 is a three-dimensional view of the support member 123 and the insulating member 1222 after assembly, and FIG. 7 is a partial cross-sectional view of the support member 123 and the insulating member 1222 after assembly. The recessed portion 1233 of the support member 123 can accommodate the portion of the first protruding portion 12221 of the insulating member 1222 located between the steps 12222, and the support member 123 is accommodated within the step 12222, such that a bottom surface of the assembled support member 123 is flush with a bottom surface of the insulating member 1222.

In some embodiments, along the width direction X, a gap D is provided between an edge of the step 12222 and an edge of the notch 1234, where the gap D is configured to avoid a portion of the second discharge hole 1223 provided along the edge of the step 12222.

For example, as shown in FIG. 8 and FIG. 9, FIG. 8 is a schematic diagram of the dimension of the insulating member 1222, and FIG. 9 is a schematic diagram of the dimensions of the insulating member 1222 and the support member 123 after assembly. A side edge of the support member 123 shown in FIG. 9 along the length direction Y of the end cap assembly 122 is formed inward to provide a notch 1234 for avoiding the step 12222, and a gap D is provided between the edge of the step 12222 and the edge of the notch 1234. Comparing the dimension of the insulating member 1222 described in FIG. 8, it can be seen that along the width direction X, a width W2 at the position of the notch 1234 of the support member 123 is less than or equal to a minimum width W1 of the second discharge hole 1223 of the insulating member 1222, that is, W2 ≤ W1.

Therefore, the notch 1234 on the support member 123 can avoid the portion of the second discharge hole 1223 on the insulating member 1222 provided along the edge of the step 12222, reducing obstruction of the second discharge hole 1223 by the support member 123, which facilitates discharge performance.

In some embodiments, as shown in FIG. 8 and FIG. 9, a dimension L2 of the notch 1234 in the length direction Y is greater than or equal to a dimension L1 in the length direction Y of the portion of the second discharge hole 1223 provided along the edge of the step 12222, that is, L2 ≥ L1. Thus, the notch 1234 can fully avoid the portion of the second discharge hole 1223 on the insulating member 1222 located at the edge of the step 12222 in the length direction Y of the end cap assembly 122, minimizing or even eliminating obstruction of the second discharge hole 1223 by the support member 123 along the edge of the second discharge hole 1223 in the length direction, further improving discharge performance.

Optionally, a sharp corner at the notch 1234 may be rounded. For example, as shown in FIG. 9, a rounded corner R may be less than W2/2 to facilitate manufacturing processes, such as 0.01 ≤ R ≤ (W2/2)-2, with units in millimeters.

In some embodiments, a projection of the first discharge hole 1231 on a plane perpendicular to the thickness direction Z does not overlap or at least partially overlap with a projection of the second discharge hole 1223 on the plane.

When the projection of the first discharge hole 1231 on the plane perpendicular to the thickness direction Z does not overlap with the projection of the second discharge hole 1223 on the plane, a total discharge area can be increased, improving discharge efficiency. When the projection of the first discharge hole 1231 on the plane perpendicular to the thickness direction Z at least partially overlaps with the projection of the second discharge hole 1223 on the plane, the discharge path between the first discharge hole 1231 and the second discharge hole 1223 can be shortened, allowing gases and other emissions inside the battery cell 120 to quickly pass through the second discharge hole 1223 on the insulating member 1222 after passing through the first discharge hole 1231 on the support member 123 and reach the pressure relief mechanism 124, and being discharged from the pressure relief mechanism 124, thereby achieving effective pressure relief and improving discharge efficiency.

It can be understood that when the first discharge hole 1231 does not overlap with the second discharge hole 1223, although the support member 123 and the insulating member 1222 may be connected by snap-fitting or other methods, a certain gap may be provided between the support member 123 and the insulating member 1222. Particularly during thermal runaway of the battery cell 120, the internal pressure of the battery cell 120 may cause deformation of the insulating member 1222, thereby increasing the gap between the support member 123 and the insulating member 1222. Therefore, the internal pressure of the battery cell 120 can pass through the first discharge hole 1231 on the support member 123 and the second discharge hole 1223 on the insulating member 1222 and be discharged to the exterior of the battery cell 120 from the pressure relief mechanism 124. Thus, even if the first discharge hole 1231 does not overlap with the second discharge hole 1223, the first discharge hole 1231 and the second discharge hole 1223 can still achieve the respective discharge functions thereof.

In some embodiments, for example, as shown in FIG. 8 and FIG. 9, the second discharge hole 1223 may be configured as annular, that is, the projection of the second discharge hole 1223 on the plane perpendicular to the thickness direction Z is annular, allowing gases and other emissions inside the battery cell 120 to be discharged uniformly in various directions within a limited area, providing superior discharge performance. The annular shape may be, for example, circular or elliptical.

In an example, FIG. 9 shows a possible position of the first discharge hole 1231, and the projection of the second discharge hole 1223 on the plane perpendicular to the thickness direction Z surrounds the projection of the first discharge hole 1231 on the plane. Taking the annular second discharge hole 1223 as an example, the first discharge hole 1231 may be provided at a position on the support member 123 corresponding to the internal region surrounded by the annular shape, such that the projection of the first discharge hole 1231 on the plane perpendicular to the thickness direction Z does not overlap with the projection of the second discharge hole 1223 on the plane, resulting in a larger total discharge area for the first discharge hole 1231 and the second discharge hole 1223, improving discharge efficiency.

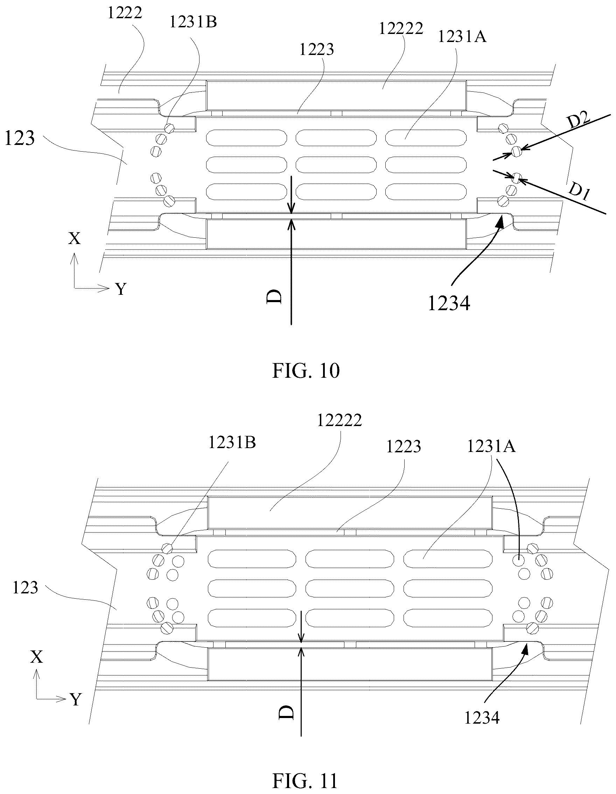

In an example, FIG. 10 shows another possible position of the first discharge hole 1231. Taking the annular second discharge hole 1223 as an example, the first discharge hole 1231 includes a first sub-discharge hole 1231A and a second sub-discharge hole 1231B, where the projection of the second discharge hole 1223 on the plane perpendicular to the thickness direction Z surrounds the projection of the first sub-discharge hole 1231A on the plane, and the projection of the second sub-discharge hole 1231B on the plane overlaps with the projection of the second discharge hole 1223 on the plane. By providing the first sub-discharge hole 1231A and the second sub-discharge hole 1231B, both the discharge area is increased and the discharge path is shortened, improving discharge efficiency.

As shown in FIG. 10, a diameter D2 of the second sub-discharge hole 1231B on the support member 123 may be, for example, greater than or equal to a dimension D1 of the annular shape of the second discharge hole 1223 along the radial direction thereof, reducing obstruction of the second discharge hole 1223 by the first discharge hole 1231, which facilitates discharge performance.

In some embodiments, as shown in FIG. 9 and FIG. 10, an area of the first sub-discharge hole 1231A is greater than or equal to an area of the second sub-discharge hole 1231B. Setting the area of the first sub-discharge hole 1231A to be greater than that of the second sub-discharge hole 1231B enables full utilization of the position on the support member 123 corresponding to the internal region surrounded by the second discharge hole 1223, thereby improving discharge efficiency and facilitating reducing the weight of the support member 123.

The number and shape of the first discharge hole 1231 may be set according to actual conditions. Typically, multiple first discharge holes 1231 may be provided, and the dimensions and shapes of the multiple first discharge holes 1231 may be the same or different. The number and shape of the second sub-discharge hole 1231B may also be set according to actual conditions.

For example, as shown in FIG. 10, the first sub-discharge hole 1231A includes an oblong hole, and the second sub-discharge hole 1231B includes a circular hole, where the first sub-discharge hole 1231A is correspondingly provided in the internal region surrounded by the annular shape, and the second sub-discharge hole 1231B is correspondingly provided in two end regions of the annular shape along the length direction Y and symmetric along the width direction X. For another example, as shown in FIG. 11, the first sub-discharge hole 1231A includes an oblong hole and a circular hole, and the second sub-discharge hole 1231B includes a circular hole, where the oblong hole of the first sub-discharge hole 1231A is correspondingly provided in the internal region surrounded by the annular shape, the circular hole of the first sub-discharge hole 1231A is correspondingly provided in end region of the internal region surrounded by the annular shape in the length direction Y and symmetric along the width direction X, and the second sub-discharge hole 1231B is correspondingly provided in regions corresponding to two end portions of the annular shape along the length direction Y and symmetric along the width direction X. The number K of the second sub-discharge holes 1231B may be, for example, set to 1 ≤ K ≤ 6, ensuring discharge performance without increasing process difficulty.

In addition to the above examples, the shape of the second sub-discharge hole 1231B may also be, for example, circular, rectangular, or an oblong hole along the centerline of the insulating member 1222 in the width direction X or the length direction Y.

In some embodiments, the support member 123 includes a main body portion 1235 and a second protruding portion 1236 protruding from the main body portion 1235 toward the electrode assembly 121, where the main body portion 1235 is configured to support tabs 1211 of the electrode assembly 121, the second protruding portion 1236 is configured to support a non-tab region on an end face 1212 of the electrode assembly 121, and the first discharge hole 1231 is located in the second protruding portion 1236.

Since the tabs 1211 of the electrode assembly 121 protrude from the end face 1212 of the electrode assembly 121 facing the support member 123, the main body portion 1235 of the support member 123 can be attached to the tabs 1211 to support the tabs 1211, and the second protruding portion 1236 protruding from the main body portion 1235 toward the electrode assembly 121 can be attached to the end face 1212 of the electrode assembly 121 to support the end face 1212. By supporting the tabs 1211 and the end face 1212 respectively with the main body portion 1235 and the second protruding portion 1236, the reliability of the support member 123 is improved. Additionally, the first discharge hole 1231 on the support member 123 can be provided on the second protruding portion 1236 and aligned with the pressure relief mechanism 124 of the battery cell 120, facilitating the discharge of internal pressure of the battery cell 120.

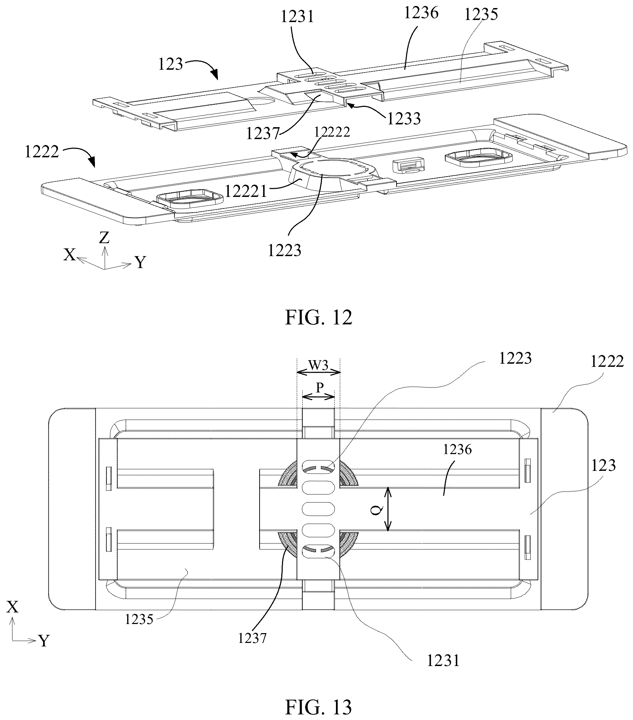

For example, as shown in FIG. 3, the tabs 1211 are typically provided at the four corner positions of the end face 1212. Therefore, for the support member 123 as shown in FIG. 5 and FIG. 6, or for the support member 123 as shown in FIG. 12 and FIG. 13, relative to the main body portion 1235, the second protruding portion 1236 protrudes toward the electrode assembly 121 along the central region of the support member 123, such that the main body portion 1235 of the support member 123 is located at the four corner positions of the second protruding portion 1236.

In some embodiments, the support member 123 is further provided with an opening 1237 penetrating the support member 123, where the opening 1237 is located at a position where the main body portion 1235 intersects with the second protruding portion 1236. The opening 1237 can be configured to avoid the first protruding portion 12221 provided at a position on the insulating member 1222 corresponding to the second protruding portion 1236 and can also reduce the weight of the support member 123.

In some embodiments, in the plane perpendicular to the thickness direction Z of the end cap assembly 122, a projection of the opening 1237 covers a portion of a projection of the second discharge hole 1223 that is not covered by a projection of the second protruding portion 1236. The opening 1237 can effectively avoid at least a portion of the second discharge hole 1223, reducing obstruction of the second discharge hole 1223 by the support member 123, which facilitates discharge performance.

In an example, as shown in FIG. 12 and FIG. 13, FIG. 12 is a schematic diagram of the support member 123 and the insulating member 1222 before assembly, and FIG. 13 is a top view of the support member 123 and the insulating member 1222 after assembly. The main body portion 1235 of the support member 123 is located at the four corner positions of the second protruding portion 1236, and the main body portion 1235 and the second protruding portion 1236 are configured to support the tabs 1211 of the electrode assembly 121 and the end face 1212 where the tabs 1211 are located, respectively. The second protruding portion 1236 includes a transverse portion extending along the length direction Y and a vertical portion extending along the width direction X, thereby obtaining a cross-shaped second protruding portion 1236 with the transverse portion and the vertical portion. The vertical portion can cooperate with the first protruding portion 12221 of the insulating member 1222 to accommodate the first protruding portion 12221. In order to facilitate cooperation between the vertical portion and the first protruding portion 12221 of the insulating member 1222, optionally, a dimension W3 of the vertical portion of the second protruding portion 1236 in the length direction Y needs to be greater than a dimension P of the first protruding portion 12221 of the insulating member 1222 in the length direction Y. For a conventional battery cell 120, for example, W3 ≥ 2 millimeters may be set.

Additionally, in order to reduce the influence of the opening 1237 on the structural strength of the support member 123, optionally, a dimension Q of the transverse portion of the second protruding portion 1236 of the support member 123 should not be set to be excessively small. For a conventional battery cell 120, for example, Q ≥ 2 millimeters may be set.

Typically, the annular shape of the second discharge hole 1223 may be circular or elliptical. When the annular shape of the second discharge hole 1223 is elliptical, the width direction X may be the direction of the short axis of the ellipse, and the length direction Y may be the direction of the long axis of the ellipse, as shown in FIG. 5 to FIG. 11. Alternatively, the width direction X may be the direction of the long axis of the ellipse, and the length direction Y may be the direction of the short axis of the ellipse, as shown in FIG. 12 and FIG. 13.

The present application further provides a battery, including the battery cell 120 described in any of the above embodiments.

The present application further provides an electric apparatus, including the battery 10 described in any of the above embodiments, where the battery 10 is configured to provide electrical energy to the electric apparatus. The electric apparatus may be, for example, the vehicle 1 described above.

Hence, the battery cell 120 of the embodiments of the present application releases the internal pressure thereof through the pressure relief mechanism 124 on the end cap assembly 122. A support member 123 may be provided between the end cap assembly 122 and the electrode assembly 121, particularly for an inverted battery cell 120, where the support member 123 can effectively support the electrode assembly 121, preventing the weight of the electrode assembly 121 from being transmitted to the tabs 1211 and causing risks. The end cap assembly 122 includes an end cap provided with the pressure relief mechanism 124 and an insulating member 1222, where a position on the insulating member 1222 corresponding to the pressure relief mechanism 124 is provided with a second discharge hole 1223, and a position on the support member 123 corresponding to the pressure relief mechanism 124 is provided with a first discharge hole 1231 penetrating the support member 123. The first discharge hole 1231 may not overlap or may at least partially overlap with the second discharge hole 1223. Thus, high-temperature and high-pressure emissions inside the battery cell 120 can pass through the first discharge hole 1231 and the second discharge hole 1223 and be discharged from the pressure relief mechanism 124, achieving effective pressure relief and enhancing the pressure relief capability of the battery cell 120. Additionally, the first discharge hole 1231 can also serve to reduce weight.

It should be noted that, without conflict, the various embodiments described in the present application and/or the technical features in the various embodiments may be arbitrarily combined, and the technical solutions obtained after combination should also fall within the scope of protection of the present application.

Although the present application has been described with reference to the preferred embodiments, various modifications to the present application and replacements of the components therein with equivalents can be made without departing from the scope of the present application. In particular, as long as there is no structural conflict, the various technical features mentioned in the various embodiments may be combined in any manner. The present application is not limited to the specific embodiments disclosed in this specification, but includes all technical solutions falling within the scope of the claims.

## Claims

1. A battery cell, **characterized by** comprising:
an electrode assembly;
an end cap assembly, comprising an end cap and an insulating member positioned between the end cap and the electrode assembly, wherein the end cap is provided with a pressure relief mechanism, and a position on the insulating member corresponding to the pressure relief mechanism is provided with a second discharge hole, the second discharge hole penetrating the insulating member along a thickness direction of the end cap assembly; and
a support member, positioned between the insulating member and the electrode assembly, wherein a position on the support member corresponding to the pressure relief mechanism is provided with a first discharge hole, the first discharge hole penetrating the support member along the thickness direction.

2. The battery cell according to claim 1, **characterized in that** a projection of the first discharge hole on a plane perpendicular to the thickness direction does not overlap with a projection of the second discharge hole on the plane.

3. The battery cell according to claim 2, **characterized in that** the projection of the second discharge hole on the plane surrounds the projection of the first discharge hole on the plane.

4. The battery cell according to claim 3, **characterized in that** the projection of the second discharge hole on the plane perpendicular to the thickness direction is annular.

5. The battery cell according to claim 1, **characterized in that** a projection of the first discharge hole on a plane perpendicular to the thickness direction at least partially overlaps with a projection of the second discharge hole on the plane.

6. The battery cell according to claim 5, **characterized in that** the first discharge hole comprises a first sub-discharge hole and a second sub-discharge hole, the projection of the second discharge hole on the plane surrounds a projection of the first sub-discharge hole on the plane, and a projection of the second sub-discharge hole on the plane overlaps with the projection of the second discharge hole on the plane.

7. The battery cell according to claim 6, **characterized in that** the projection of the second discharge hole on the plane perpendicular to the thickness direction is annular, and a dimension of the annular shape along the radial direction thereof is less than or equal to a dimension of the second sub-discharge hole along the radial direction.

8. The battery cell according to claim 6 or 7, **characterized in that** an area of the first sub-discharge hole is greater than or equal to an area of the second sub-discharge hole.

9. The battery cell according to any one of claims 1 to 8, **characterized in that** the insulating member is provided with a first protruding portion that protrudes toward the support member, and the second discharge hole is at least partially located in the first protruding portion.

10. The battery cell according to claim 9, **characterized in that** an end portion of the first protruding portion along a width direction of the end cap assembly is provided with a step, and a side edge of the support member along a length direction of the end cap assembly is formed inward to provide a notch for avoiding the step.

11. The battery cell according to claim 10, **characterized in that** a gap is provided between an edge of the step and an edge of the notch along the width direction, wherein the gap is configured to avoid a portion of the second discharge hole provided along the edge of the step.

12. The battery cell according to claim 11, **characterized in that** a dimension of the notch in the length direction is greater than or equal to a dimension, in the length direction, of the portion of the second discharge hole provided along the edge of the step.

13. The battery cell according to any one of claims 1 to 12, **characterized in that** the support member comprises a main body portion and a second protruding portion that protrudes from the main body portion toward the electrode assembly, wherein the main body portion is configured to support tabs of the electrode assembly, the second protruding portion is configured to support a non-tab region on an end face of the electrode assembly, and the first discharge hole is located in the second protruding portion.

14. The battery cell according to claim 13, **characterized in that** the support member is further provided with an opening penetrating the support member, wherein the opening is located at a position where the main body portion intersects with the second protruding portion.

15. The battery cell according to claim 14, **characterized in that** in a plane perpendicular to the thickness direction of the end cap assembly, a projection of the opening covers a portion of a projection of the second discharge hole that is not covered by a projection of the second protruding portion.

16. The battery cell according to any one of claims 1 to 15, **characterized in that** an end portion of the support member in the length direction of the end cap assembly is provided with a hooking portion, wherein the hooking portion is configured to hook and engage with the insulating member to connect the support member to the end cap assembly.

17. A battery, **characterized by** comprising at least one battery cell according to any one of claims 1 to 16.

18. An electric apparatus, **characterized by** comprising the battery according to claim 17, wherein the battery is configured to supply power to the electric apparatus.
